# NEUE EUROPÄISCHE PATENTSCHRIFT

(11) **EP 0 319 832 B2**
(45) Veröffentlichungstag und Bekanntmachung des Hinweises auf die Entscheidung über den Einspruch: **07.12.1994**
(45) Hinweis auf die Patenterteilung: 26.02.1992
(21) Anmeldenummer: 88119918.6
(22) Anmeldetag: 30.11.1988
(51) Int. Cl.: B29C 67/14, D04H 3/10

(54) **Glasmattenverstärktes thermoplastisches Halbzeug**
Thermoplastic glass mat-reinforced preform
Ebauche en matière thermoplastique renforcée de nappes de verre

(30) Priorität: 09.12.1987 DE 3741667
(43) Veröffentlichungstag der Anmeldung: 14.06.1989
(73) Patentinhaber: BASF Aktiengesellschaft, 67063 Ludwigshafen (DE)
(72) Erfinder: Wahl, Ludwig, D-6707 Schifferstadt (DE); Vogel, Helmut, D-4550 Bramsche 8 (DE)

(56) Entgegenhaltungen:
- DE-A- 3 029 442
- DE-A- 3 112 496
- DE-C- 3 029 442
- US-A- 2 794 238
- US-A- 2 794 759
- US-A- 2 970 365
- US-A- 3 772 115

## Beschreibung

Die Erfindung betrifft ein faserverstärktes, thermoplastisch verformbares Halbzeug mit verbesserter Fließfähigkeit bei der Preßverarbeitung, enthaltend ein thermoplastisches Polymeres und zwei genadelte Glasfasermatten.

Glasmattenverstärktes thermoplastisches Halbzeug (GMT) wird in steigendem Maße zur Herstellung von Fertigteilen, insbesondere für den Automobilbau, eingesetzt. Die Verarbeitung erfolgt durch Pressen bei Temperaturen oberhalb des Erweichungspunktes des Thermoplasten. Wenn dabei kompliziert geformte Preßteile hergestellt werden sollen, die z.B. Rippen, Ausbuchtungen oder steile Wandungen aufweisen, dann muß das Halbzeug fließfähig sein, d.h., die Glasfasermatten müssen eine Beweglichkeit aufweisen, die gewährleistet, daß auch die genannten Rippen und Ausbuchtungen mit Fasern verstärkt sind.

Ein solches fließfähiges GMT wird erhalten, wenn man genadelte Glasfasermatten verwendet, wie sie z.B. in DE-A-31 12 496 (US 4 335 176) beschrieben sind. Durch die Nadelung werden die Matten, die im allgemeinen aus wirr verlegten Endlos- oder Schnittglasfasern bestehen, fixiert, d.h. sie erhalten einen inneren Zusammenhalt und eine für Transport und Weiterverarbeitung ausreichende Festigkeit. Zum anderen werden die Matten aufgelockert und erhalten infolge eines gezielt einstellbaren Glasbruchs eine für die Fließpreßverarbeitung ausreichende Beweglichkeit.

Bei der Nadelung werden durch die an den Nadeln angebrachten Widerhaken einzelne Glasfäden erfaßt und in Durchstoßrichtung der Nadeln senkrecht zur Mattenoberfläche transportiert. Durch Erhöhung der Einstichzahl pro cm² und durch Einsatz von Nadeln mit mehr oder gröberen Widerhaken kann die Anzahl der umorientierten Fäden und die Menge an Faserbruch erhöht werden, wodurch die Festigkeit und Fließfähigkeit der Matten gesteuert werden kann. Bei Einsatz von Nadeln mit Widerhaken, die nach oben gerichtet sind (reversed barbs - siehe DE-A-30 29 442 - US 4 277 531) gilt sinngemäß das Gleiche, wobei Faserenden aus der Matte herausgezogen werden. Nach einem Vergleichsbeispiel dieser Druckschrift wird eine Glasfasermatte mit Nadeln genadelt, die in beide Richtungen wirkende Haken aufweisen. Daraus hergestellte Laminate weisen eine verhältnismäßig geringe Festigkeit auf.

In beiden Fällen entstehen genadelte Fasermatten mit zwei verschiedenen Oberflächen: eine Oberfläche ist verhältnismäßig glatt, während die andere eine Vielzahl von herausstehenden Faserenden (spikes) aufweist. Insbesondere bei der Herstellung von fließfähigem GMT-Halbzeug nach DE-A-31 12 496 müssen die Nadeln die Fasermatte voll durchstechen und auf der Ausstichseite (Unterseite der Matte) einige mm herausragen, damit innerhalb der Matte ein ausreichender und gleichmäßiger Glasbruch erfolgt. Dies führt dazu, daß diese Unterseite viele und verhältnismäßig lange herausstehende Faserenden aufweist (siehe Abbildungen in DE-A-31 12 496). Das führt aber zu Problemen bei der Verarbeitung des Halbzeugs. Bei dessen Herstellung durch gemeinsames Verpressen von Fasermatten und Kunststoffschmelze erfolgt bekanntlich eine Dickenreduktion der Matten, die durch den beim Abkühlen erstarrenden Kunststoff fixiert wird. Beim Wiederaufschmelzen des Halbzeugs vor der Preßverarbeitung expandiert dieses, bedingt durch die Rückstellkräfte der Fasermatten. Diese an sich unerwünschte, da störende Expansion ist nun umso stärker, je länger und zahlreicher die aus der Mattenoberfläche herausragenden Fadenenden sind.

Der Erfindung lag also die Aufgabe zugrunde, diese Probleme zu vermeiden und ein gut verarbeitbares Halbzeug bereitzustellen, das Fertigteile mit gleichmäßiger Struktur, guten mechanischen Eigenschaften und glatten Oberflächen ergibt.

Diese Aufgabe wird erfindungsgemäß dadurch gelöst, daß man zwei symmetrisch genadelte Glasfasermatten verwendet. Die Matten sind so genadelt, daß die Anzahl und die Länge der aus beiden Mattenoberflächen herausragenden Fasern praktisch gleich groß ist, wobei die Länge der herausragenden Fasern im Mittel vorzugsweise weniger als 4 mm, insbesondere weniger als 2 mm beträgt.

Zur Herstellung der genadelten Matten geht man vorzugsweise von üblichen Endlosfasern oder Schnittglasfasern aus. Man kann aber auch Stapelfasern einsetzen. Die Glasfasern sind mit üblichen Schlichten versehen, die auf das beim Tränken verwendete Polymere abgestimmt sein sollten. Die Fasern werden zu Matten abgelegt und dann nach verschiedenen Verfahren genadelt:

Bei einem Verfahren werden die Glasmatten zunächst von einer Seite genadelt, dann gewendet und von der anderen Seite noch einmal genadelt. Dabei kann der zweite Durchlauf auf der gleichen Nadelmaschine wie beim ersten Mal vorgenommen werden oder auf einer weiteren, nachgeschalteten Nadelmaschine.

Bei einem anderen Verfahren wird mit Nadeln gearbeitet, die sowohl nach unten gerichtete Widerhaken als auch nach oben gerichtete Widerhaken (reversed barbs) aufweisen.

Ferner kann man mit einem Nadelbrett arbeiten, das sowohl Nadeln mit nach unten gerichteten Widerhaken als auch Nadeln mit nach oben gerichteten Widerhaken enthält. Man kann auch mit zwei hintereinander angeordneten Nadelbrettern arbeiten, von denen eines Nadeln mit nach unten gerichteten Widerhaken und das andere Nadeln mit nach oben gerichteten Widerhaken enthält. Die aus der Glasmatte durch Nadeln, welche nach oben gerichtete Widerhaken enthalten, herausgezogenen Faserenden sind im allgemeinen etwas länger als die Faserenden, die aus der Glasmatte durch Nadeln, welche nach unten gerichtete Widerhaken aufweisen, herausgestoßen werden.

Bei einer bevorzugten Ausführungsform werden die Glasmatten mit einer Doppelnadelmaschine gleichzeitig sowohl von oben als auch von unten genadelt. Besonders günstig ist es, dabei sogenannte Krönchennadeln zu verwenden, bei denen nahe der Spitze (z.B. 3 mm davon entfernt) auf dem dreikantigen Schaft auf gleicher Höhe drei nach unten gerichtete Widerhaken angebracht sind. Allen beschriebenen Verfahren ist gemeinsam, daß eine verhältnismäßig geringe Durchstoßtiefe der Nadeln durch die Matte ausreicht. Bei nur einseitiger Nadelung würde dies einseitigen, unzureichenden Glasbruch nur an der Einstichseite zur Folge haben, was einerseits zu unterschiedlichen Festigkeiten, andererseits zu unterschiedlicher Tränkbarkeit an Ein- und Ausstichseite führen würde. Bei symmetrischer Nadelung treten diese Nachteile nicht auf, und es gelingt, bei geringer Einstichzahl und geringer Einstichtiefe dünne Matten mit ausreichender Festigkeit, guter Tränkbarkeit und hoher Fließfähigkeit bei der Preßverarbeitung zu erhalten. Die Matten weisen wenig und verhältnismäßig kurze aus beiden Oberflächen gleichmäßig herausragende Fasern auf, die bei der Preßverarbeitung nicht stören.

Ein Kriterium für die Qualität der genadelten Matten ist ihre Reißfestigkeit. Zu deren Messung wird ein etwa 100 mm breiter und etwa 200 mm langer Streifen zwischen zwei etwa 100 mm breiten Backen, die einen Abstand von 100 mm voneinander aufweisen, eingespannt. Die Kraft, bei der der Streifen reißt, wird gemessen. Sie soll zwischen 10 und 50 N pro 100 mm, vorzugsweise zwischen 15 und 30 N pro 100 mm liegen.

Bei zu geringer Reißfestigkeit besteht die Gefahr des Reißens der Matte bei der Verarbeitung, z.B. beim Abwickeln von der Rolle, und beim Tränken in der Doppelbandpresse verliert die Matte ihre Konsistenz und zerfließt. Bei zu hoher Reißfestigkeit nimmt im fertigen Halbzeug die Fließfähigkeit der Matte bei der Preßverarbeitung ab.

Die Reißfestigkeit kann durch verschiedene Größen beeinflußt werden: z.B. durch die Einstichzahl pro cm² und die Tiefe der Einstiche, ferner durch die Anzahl und Grobheit der Widerhaken. Von Einfluß ist aber auch die Art der Glasschlichte: bei spröder Schlichte tritt mehr Glasbruch auf, wodurch die Reißfestigkeit verringert wird.

Zur Herstellung des erfindungsgemäßen Halbzeugs können übliche Tränkverfahren angewandt werden. Bevorzugt werden die zwei genadelten Matten mit drei aus Extrudern mit Breitschlitzdüsen ausgepreßten Schmelzeschichten des thermoplastischen Polymeren zusammengeführt und z.B. in einer Doppelbandpresse getränkt, wie in der DE-A-29 48 235 beschrieben. Alle üblichen thermoplastischen Polymeren kommen dabei in Frage, bevorzugt sind Polypropylen, Polyamide, thermoplastische Polyester, z.B. Polyethylenterephthalat, Polysulfone, Polyetherketone sowie Mischungen davon. Die Polymeren können die üblichen Zusatzstoffe enthalten. Der Glasfasergehalt des fertigen Halbzeugs soll bevorzugt zwischen 25 und 50 Gew.% liegen. Die Dicke des Halbzeugs liegt im allgemeinen zwischen 2 und 5 mm.

Die erfindungsgemäßen Halbzeuge können nach üblichen Preßverfahren bei Temperaturen oberhalb des Erweichungspunktes des Polymeren zu Fertigteilen, insbesondere für den Automobil-, Maschinen- und Haushaltsgerätebau verarbeitet werden.

### Beispiel

Aus Rovings mit für Polypropylen geeigneter Schlichte wurde ein Endlosfasergelege erzeugt und einer Nadelmaschine zugeführt. Die Ablagebreite betrug 1200 mm. Das Nadelbrett war wie folgt bestückt: an der Einlaufseite 2 Reihen Close-barb Filznadeln, dann 14 Reihen Krönchennadeln, gefolgt von 14 Reihen Reversed-barb Nadeln. Die Nadelung erfolgte mit 49 Einstichen je 1 cm², wobei die Einstichtiefe 11 mm betrug. Die erzeugte Matte hatte ein Flächengewicht von 700 g/m² und eine Mattenreißfestigkeit von ca. 30 N/100 mm. Zwei solcher Matten wurden mit 3 Schmelzebahnen aus PP unter Temperatur und Druck getränkt. Die erhaltenen GMT-Platten hatten eine Dicke von 3,8 mm bei einem Glasgehalt von 32 Gew.%.

## Patentansprüche

1. Faserverstärktes, thermoplastisch verformbares Halbzeug, enthaltend zwei genadelte Glasfasermatten, die mit einem thermoplastischen Polymeren getränkt sind, dadurch gekennzeichnet, daß die Glasfasermatten symmetrisch genadelt sind.

2. Faserverstärktes Halbzeug nach Anspruch 1, dadurch gekennzeichnet, daß die Glasfasermatten so genadelt sind, daß die Anzahl und die Länge der aus den beiden Mattenoberflächen herausragenden Faserenden praktisch gleich groß sind, wobei die Länge der herausragenden Fasern im Mittel weniger als 2 mm beträgt.

3. Faserverstärktes Halbzeug nach Anspruch 1, dadurch gekennzeichnet, daß die Glasmatten eine Reißfestigkeit, gemessen an einem 100 mm breiten Streifen, von 10 bis 50 N aufweisen.

4. Faserverstärktes Halbzeug nach Anspruch 1, dadurch gekennzeichnet, daß die Glasfasermatten ein Flächengewicht von 200 bis 2500 g/m² aufweisen.

5. Verfahren zur Herstellung eines faserverstärkten Halbzeugs nach Anspruch 1, wobei die Glasmatten zunächst von einer Seite genadelt werden, dann gewendet und von der anderen Seite noch einmal genadelt werden, und daß die derart genadelten Matten mit einem thermoplastischen Polymeren getränkt werden.

6. Verfahren zur Herstellung eines faserverstärkten Halbzeugs nach Anspruch 1, wobei die Glasmatten mit Hilfe von Nadeln genadelt werden, die sowohl nach unten gerichtete Widerhaken als auch nach oben gerichtete Widerhaken (reversed barbs) aufweisen, und daß die derart genadelten Matten mit einem thermoplastischen Polymeren getränkt werden.

7. Verfahren zur Herstellung eines faserverstärkten Halbzeugs nach Anspruch 1, wobei die Glasmatten mit Hilfe eines Nadelbretts genadelt werden, das sowohl Nadeln mit nach unten gerichteten Widerhaken als auch Nadeln mit nach oben gerichteten Widerhaken enthält, und daß die derart genadelten Matten mit einem thermoplastischen Polymeren getränkt werden.

8. Verfahren zur Herstellung eines faserverstärkten Halbzeugs nach Anspruch 1, wobei die Glasmatten mit Hilfe von zwei hintereinander angeordneten Nadelbrettern genadelt werden, von denen eines Nadeln mit nach unten gerichteten Widerhaken und das andere Nadeln mit nach oben gerichteten Widerhaken enthält, und daß die derart genadelten Matten mit einem thermoplastischen Polymeren getränkt werden.

9. Verfahren zur Herstellung eines faserverstärkten Halbzeugs nach Anspruch 1, wobei die Glasmatten mit einer Doppelnadelmaschine genadelt werden, die gleichzeitig sowohl von oben als auch von unten nadelt, und daß die derart genadelten Matten mit einem thermoplastischen Polymeren getränkt werden.

10. Verfahren zur Herstellung des Halbzeugs nach den Ansprüchen 5 und 9, dadurch gekennzeichnet, daß zur Nadelung Krönchennadeln verwendet werden, bei denen nahe der Spitze auf dem dreikantigen Schaft auf gleicher Höhe drei nah unten gerichtete Widerhaken angebracht sind.

## Claims

1. A fiber reinforced thermoplastically moldable material comprising two needled glass fiber mats impregnated with a thermoplastic polymer, wherein the glass fiber mats have been needled symmetrically.

2. A fiber reinforced molding material as claimed in claim 1, wherein the glass fiber mats have been needled in such a way that the number and the length of the fiber end spikes protruding from the two surfaces of the mats are virtually identical, the length of spike being on average less than 2 mm.

3. A fiber reinforced molding material as claimed in claim 1, wherein the glass mats have a breaking strength of from 10 to 50 N when measured on a 100 mm wide strip.

4. A fiber reinforced molding material as claimed in claim 1, wherein the glass fiber mats have a basis weight of 200 to 2500 g/m².

5. A process for producing a fiber reinforced molding material as claimed in claim 1, which comprises first needling the glass mats from one side, then turning them over and needling them once more from the other side and impregnating the mats thus needled with a thermoplastic polymer.

6. A process for producing a fiber reinforced molding material as claimed in claim 1, which comprises needling the glass mats with the aid of needles which have not only downwardly pointing barbs but also upwardly pointing, reversed barbs and impregnating the mats thus needled with a thermoplastic polymer.

7. A process for producing a fiber reinforced molding material as claimed in claim 1, which comprises needling the glass mats with the aid of a needle board which contains not only needles having downwardly pointing barbs but also needles having upwardly pointing, reversed barbs and impregnating the mats thus needled with a thermoplastic polymer.

8. A process for producing a fiber reinforced molding material as claimed in claim 1, which comprises needling the glass mats with the aid of two successive needle boards, of which one contains needles having downwardly pointing barbs and the other needles having upwardly pointing, reversed barbs, and impregnating the mats thus needled with a thermoplastic polymer.

9. A process for producing a fiber reinforced molding material as claimed in claim 1, which comprises needling the glass mats with a double needling machine, which needles at one and the same time not only from above but also from below, and impregnating the mats thus needled with a thermoplastic polymer.

10. A process for producing the molding material as claimed in claim 5 or 9, wherein the needling is carried out using crowned needles, needles where there are three downwardly pointing barbs disposed on the three-edged shank at the same level close to the tip.

## Revendications

1. Ebauche renforcée de fibres, déformable ther- moplastiquement, contenant deux nappes de fibres de verre aiguilletées qui sont imprégnées d'un polymère thermoplastique, caractérisée en ce que les nappes de fibres de verre sont aiguilletées symétriquement.

2. Ebauche renforcée de fibres selon la revendication 1, caractérisée en ce que les nappes de fibres de verre sont aiguilletées de telle sorte que le nombre et la longueur des extrémités de fibres qui font saillie sur les deux surfaces des nappes soient pratiquement égaux, la longueur des fibres saillantes s'élevant en moyenne à moins de 2 mm.

3. Ebauche renforcée de fibres selon la revendication 1, caractérisée en ce que les nappes de verre présentent une résistance à la traction, mesurée sur une bande de 100 mm de largeur, de 10 à 50 N.

4. Ebauche renforcée de fibres selon la revendication 1, caractérisée en ce que les nappes de fibres de verre présentent un grammage de 200 à 2500 g_{/m}².

5. Procédé de fabrication d'une ébauche renforcée de fibres selon la revendication 1, dans lequel les nappes de verre sont d'abord aiguilletées d'un côté, puis retournées et aiguilletées encore une fois de l'autre côte, et les nappes ainsi aiguilletées sont imprégnées d'un polymère thermoplastique.

6. Procédé de fabrication d'une ébauche renforcée de fibres selon la revendication 1, dans lequel les nappes de verre sont aiguilletées au moyen d'aiguilles qui présentent à la fois des barbes dirigées vers le bas et des barbes dirigées vers le haut (reversed barbs), et les nappes ainsi aiguilletées sont imprégnées d'un polymère thermoplastique.

7. Procédé de fabrication d'une ébauche renforcée de fibres selon la revendication 1, dans lequel les nappes de verre sont aiguilletées au moyen d'une planche à aiguilles qui comporte à la fois des aiguilles dont les barbes sont dirigées vers le bas et des aiguilles dont les barbes sont dirigées vers le haut, et les nappes ainsi aiguilletées sont imprégnées d'un polymère thermoplastique.

8. Procédé de fabrication d'une ébauche renforcée de fibres selon la revendication 1, dans lequel les nappes de verre sont aiguilletées au moyen de deux planches à aiguilles disposées l'une derrière l'autre, dont l'une comporte des aiguilles a barbes dirigées vers le bas et l'autre comporte des aiguilles a barbes dirigées vers le haut, et les nappes ainsi aiguilletées sont imprégnées d'un polymère thermoplastique.

9. Procédé de fabrication d'une ébauche renforcée de fibres selon la revendication 1, dans lequel les nappes de verre sont aiguilletées avec une machine de double aiguilletage qui effectue simultanément un aiguilletage de haut en bas et de bas en haut, et les nappes ainsi aiguilletées sont imprégnées d'un polymère thermoplastique.

10. Procédé de fabrication de l'ébauche selon la revendication 5 ou 9, caractérisé en ce qu'il est utilisé, pour l'aiguilletage, des aiguilles à couronne, sur lesquelles trois barbes dirigées vers le bas sont disposées a proximité de la pointe, à la même hauteur sur la tige à trois pans.
